# EUROPÄISCHE PATENTANMELDUNG

(11) **EP 4 470 980 A1**
(43) Veröffentlichungstag der Anmeldung: **04.12.2024**
(21) Anmeldenummer: 23176885.4
(22) Anmeldetag: 02.06.2023
(51) Int. Cl.: C03C 3/093, C03C 8/04, C03C 11/00, C03C 17/04, C03C 27/04, C04B 37/00, G01K 1/00, H01L 21/00

(54) **TEMPERATURSENSOR MIT FIXIERTROPFEN UND RUNDEN POREN (ROHS)**

(71) Anmelder: Yageo Nexensos GmbH, 63801 Kleinostheim (DE)
(72) Erfinder: Sander, Margit, 63801 Kleinostheim (DE); Oberesch, Jutta, 63801 Kleinostheim (DE)
(74) Vertreter: Meissner Bolte Partnerschaft mbB

(57) **Zusammenfassung**

Die vorliegende Erfindung betrifft Glaszusammensetzungen, insbesondere Fixiertropfen, ein passives Bauelement, ein Verfahren zu dessen Herstellung, ein passives Bauelement erhältlich durch dieses Verfahren, sowie die Verwendung solcher Glaszusammensetzung zur Zugentlastung von Anschlussdrähten an passive Bauelementen.

## Beschreibung

Die vorliegende Erfindung betrifft Glaszusammensetzungen, insbesondere Fixiertropfen, ein passives Bauelement, ein Verfahren zu dessen Herstellung, ein passives Bauelement erhältlich durch dieses Verfahren, sowie die Verwendung solcher Glaszusammensetzung zur Zugentlastung von Anschlussdrähten an passiven Bauelementen.

Unter passivem Bauelement werden in der Regel jene Bauelemente verstanden, die, im Gegensatz zu aktiven Bauelementen, keine Verstärkerwirkung zeigen und keine Steuerungsfunktion besitzen, Beispiele für passive Bauelemente wären z.B. Widerstände, Kondensatoren, Sensoren und Heizer.

Im Sinne der Erfindung umfasst ein passives Bauelement vorzugsweise ein Substrat, eine mehrlagige Struktur, die sich auf dem Substrat befindet, mindestens einen Anschlussdraht und eine Glaszusammensetzung zur Zugentlastung des mindestens einen Anschlussdrahts. Die mehrlagige Struktur wiederum umfasst vorzugsweise ein Anschlusspad, an dem der mindestens eine Anschlussdraht fixiert ist, Leiterbahnen, und mindestens eine dieelektrische Schicht, insbesondere eine siebgedruckte Glasschicht, die zwischen der Glaszusammensetzung und dem Substrat angeordnet ist und die Leiterbahnen bedeckt, aber die Anschlusspads freilässt.

Die Glaszusammensetzung, insbesondere Fixiertropfen, dient vorwiegend zur Zugentlastung des mindestens einen Anschlussdrahts. Hierdurch wird einerseits gewährleistet, dass der mindestens eine Anschlussdraht sicher fixiert ist und anderseits schützt die Glaszusammensetzungen die von ihr abgedeckten Bereiche vor möglichen äußeren Einflüssen wie z.B. auskondensierter Luftfeuchtigkeit.

Einzelanfertigungen von passiven Baudelementen sind für die Massenproduktion in der Regel zu kostenintensiv. Folglich werden für die Massenproduktion von passiven Bauelementen, mehrere Strukturen auf einem gemeinsamen Substrat angeordnet, wobei mindestens ein Anschlussdraht an der jeweiligen Struktur mechanisch fixiert ist. Durch das Auftragen einer durchgängigen Glaszusammensetzung, welche als durchgängige Schicht über mehrere Chips verläuft und diese zumindest anteilig bedeckt, werden die Anschlussdrähte zugentlastet. Das anschließende Vereinzeln der Bauelemente umfasst dann das Durchtrennen des Substrates und der Glaszusammensetzungen.

Für das Vereinzeln der passiven Bauelemente stehen verschiedene Möglichkeiten zur Auswahl, wobei die passiven Bauelemente in der Regel durch Sägen vereinzelt werden. Diese Vorgehensweise ist zwar mit einem Mehraufwand verbunden, insbesondere wenn die passiven Bauelemente ein hartes Substrat, z.B. auf Basis von Al₂O₃, umfassen. Sie ist allerdings unabhängig von der Glaszusammensetzung anwendbar und mit geringen Ausfällen verbunden. Alternativ bietet sich die deutlich weniger arbeitsintensive und materialverschleißärmere und damit kostengünstigere Vereinzelung durch Brechen an. Diese Methode ist allerdings mit der Herausforderung verbunden, dass das Brechen von Glas, insbesondere durch den Fixiertropfen, oftmals mit höheren Ausfallraten verbunden ist.

Eine Möglichkeit, um zumindest die Anforderung an die Brechbarkeit zu umgehen, wäre die Glaszusammensetzung nur punktuell an die Anschlussdrähte anzubringen, sodass das Durchbrechen der Glaszusammensetzung entfallen würde. Diese Vorgehensweise wäre zwar prinzipiell möglich, damit wäre das punktuelle Dosieren allerdings mit einem Mehraufwand verbunden und würde folglich den Prozess- und Kostenvorteil, der durch das Vermeiden des Durchsägens gewonnen wurde, wieder ausgleichen.

Da die meisten Glaszusammensetzungen nicht definiert brechen, weisen Gläser, die nicht für diese Art der Vereinzelung optimiert wurden, schiefe Bruchflächen oder andere Schäden auf. Unter der Bruchfläche wird, die durch die Vereinzelung neu entstandene Fläche eines passiven Bauteils verstanden. In diesem Zusammenhang sind beispielsweise Risse oder Abplatzungen an der Bruchfläche zu nennen. Weiterhin können die Risse auch in das Innere der Glaszusammensetzung propagieren, wobei diese nur schwer zu erkennen sind. Passive Bauteile mit solchen mangelhaft gebrochenen Glaszusammensetzungen sind oft nicht für die weitere Verwendung geeignet.

Überraschenderweise wurde festgestellt, dass das negative Bruchverhalten unter anderem darauf zurückgeführt werden kann, dass Glaszusammensetzungen gemäß dem Stand der Technik oftmals einen zu geringen Volumenanteil von Poren aufweisen. Der Volumenanteil der Poren und deren Form ist zumindest im Bezug auf den Vorgang des Vereinzelns weitestgehend vernachlässigbar, wenn die passiven Bauelemente durch Sägen vereinzelt werden, da hierbei das Bruchverhalten der zu durchtrennenden Glaszusammensetzen weniger von Bedeutung ist.

Sollen die passiven Bauelemente hingegen durch Brechen vereinzelt werden ist es entscheidend, dass das Brechen einer vorhersehbaren Weise, entlang einer gewünschten Richtung, erfolgt. Weist eine Glaszusammensetzung einen zu geringen Volumenanteil Poren auf, so ist es möglich, dass sich der erzeugte Bruch auf unbestimmte Zeit entlang der im Glas natürlich vorhandenen Risse fortsetzt. Durch einen erhöhten Anteil an Poren in der Glaszusammensetzung wird die Länge solcher Risse reduziert, sodass eine ungewünschte Bruchfortsetzung unterbunden wird.

Überraschenderweise konnte im Rahmen dieser Anmeldung festgestellt werden, dass die Rissausbreitung abseits der Hauptrichtung in der erfindungsgemäßen Glaszusammensetzung, insbesondere durch homogen verglaste Poreninnenwänden und dazwischenliegende Bereiche mit höheren Anteilen an kristalliner und feinkristalliner Morphologie zwischen den Porengrenzbereichen, unterdrückt werden kann.

Diese sekundäre Verglasung bildet sich vorzugsweisewährend des Einbrenn- oder Abkühlvorgangs des Fixiertropfens frisch aus. Die sekundäre Verglasung befindet sich vorzugsweise nicht ausschließlich am Rande der Fixiertropfenstruktur, sondern umschließt auch die Poreninnenwände. Diese frisch erzeugten Glasanteile umfassen vorzugsweise mindestens 4%, bevorzugt mindestens 6% des festen Materialanteils (ohne Porenvolumen) im Fixiertropfen.

Glaszusammensetzungen, die einen höheren Anteil an Poren aufweisen, zeigen daher ein besseres Bruchverhalten. Hieraus lässt sich weiterhin ein besonders vorteilhaftes Herstellungsverfahren ableiten, nämlich, dass die Glaszusammensetzungen als durchgängiger Strang über die Anschlussdrähte aufgetragen werden kann und anschließend das passive Bauelement vereinzelt werden kann, ohne, dass es zu hohen Ausfallquoten infolge von fehlerhaft gebrochenem Glas kommt.

Ein weiterer Vorteil, der durch einen erhöhten Anteil an Poren in der Glaszusammensetzung erzielt wird, ist das eine dickere Schicht der Glaszusammensetzung aufgetragen werden kann. Glaszusammensetzung gemäß dem Stand der Technik sind bei vertretbaren Ausfallquoten meistens nur bis zu einer Gesamthöhe von 0,8 mm, einschließlich der Höhe von 0,4 mm der darunterliegenden Komponenten des passiven Bauelements, brechbar.

Die erfindungsgemäße Glaszusammensetzung ist hingegen noch bei Höhen Gesamthöhe von 0,9 mm, einschließlich der Höhe von 0,4 mm der darunterliegenden Komponenten des passiven Bauelements, brechbar. Hierdurch ergibt sich der Vorteil, dass die dicker aufgetragene erfindungsgemäße Glaszusammensetzung eine erhöhte Schutzwirkung, z.B. gegen mögliche Wasserschläge, aufweist.

Ein grundlegendes Problem, welches sich bei der Bereitstellung von Glaszusammensetzungen mit vorteilhaften Brucheigenschaften stellt, ist daher einen Mindestvolumenanteil an Poren in der Glaszusammensetzung zu erreichen. Hierbei wurde überraschenderweise gefunden, dass der Volumenanteil an Poren in der Glaszusammensetzung durch die Einstellung der Temperatur beeinflusst werden kann. Insbesondere existiert nicht notwendig der Zusammenhang, dass höhere Herstellungstemperaturen grundsätzlich durch bessere Versinterung der Glaszusammensetzung mit niedrigerem Porenvolumen einhergehen.

Die Aufgabe der vorliegenden Erfindung besteht darin, eine Glaszusammensetzung mit einem Mindestvolumenanteil an Poren bereitzustellen, welche nach dem Aufbringen auf ein Substrat, gebrochen werden kann und vorstehend genannte Nachteile bei dieser Art der Vereinzelung minimiert. Insbesondere besteht die Aufgabe der vorliegenden Erfindung darin, eine Glaszusammensetzung, insbesondere Fixiertropfen, zur Zugentlastung von Anschlussdrähten an passiven Bauelementen auf einem anorganischen Substrat, bereitzustellen, wobei die Glaszusammensetzung einen Volumenanteil an Poren von mehr als 15 Vol.-% als relativer Flächenanteil der Poren in einer Querschnittsfläche senkrecht zum Substrat aufweist.

Diese Aufgabe wurde überraschenderweise durch eine Glaszusammensetzung gemäß Anspruch 1 gelöst, insbesondere durch eine Glaszusammensetzung, insbesondere Fixiertropfen, zur Zugentlastung von Anschlussdrähten an passiven Bauteilen, insbesondere Sensoren, vorzugsweise Temperatursensoren, oder Heizern auf einem anorganischen Substrat, insbesondere Metalloxid- (mit oder ohne Oxid-Passivierungsschicht), Halbleiter- und/oder Glassubstrat, dadurch gekennzeichnet, dass die erfindungsgemäße Glaszusammensetzung Poren mit einem Volumenanteil von mehr als 15 Vol.-% als relativer Flächenanteil der Poren in einer Querschnittsfläche senkrecht zum Substrat aufweist.

Die erfindungsgemäße Glaszusammensetzung ist vorzugsweise dadurch gekennzeichnet, dass es sich bei den Poren um ein geschlossenporiges System handelt, sodass die Poren vorzugsweise nicht miteinander verbunden sind.

Insbesondere handelt es sich bei den Poren jeweils um geschlossene Poren.

Eine nach optischem Kriterium geschlossene Pore ist dabei vorzugsweise eine Pore, die in zwei parallelen, senkrechten Schnitten durch den Fixiertropfen im Abstand von 100% der maximal in den Schnitten vorkommenden Porenausdehnung in Messung senkrecht zum Substrat nur in einem der beiden Schnitte sichtbar ist.

Nachfolgend werden zahlreiche spezifische Details erörtert, um ein umfassendes Verständnis des vorliegenden Gegenstands zu ermöglichen. Es ist jedoch für den Fachmann offensichtlich, dass der Gegenstand auch ohne diese spezifischen Details praktiziert und nachgearbeitet werden kann.

Alle Merkmale einer Ausführungsform können mit Merkmalen einer anderen Ausführungsform kombiniert werden, wenn die Merkmale der verschiedenen Ausführungsformen vereinbar sind.

Die in der Beschreibung der vorliegenden Offenbarung verwendete Terminologie dient nur der Beschreibung bestimmter Ausführungsformen und ist nicht als Einschränkung des Gegenstands zu verstehen. Wie in der vorliegenden Beschreibung und den Ansprüchen verwendet, sind die Singularformen "ein", "eine" und "die" so zu verstehen, dass diese auch die Pluralformen einschließen, sofern der Kontext nicht eindeutig etwas Anderes vorgibt. Dies gilt auch umgekehrt, d.h. die Pluralformen schließen auch die Singularformen ein. Es versteht sich auch, dass der Begriff "und/oder", wie er hier verwendet wird, sich auf alle möglichen Kombinationen von einem oder mehreren der zugehörigen aufgelisteten Elemente bezieht und diese einschließt. Es versteht sich weiterhin, dass die Begriffe "beinhaltet", "einschließlich", "umfasst" und/oder "umfassend", wenn sie in der vorliegenden Beschreibung und den Ansprüchen verwendet werden, das Vorhandensein der angegebenen Merkmale, Schritte, Operationen, Elemente und/oder Komponenten spezifizieren, aber nicht das Vorhandensein oder Hinzufügen eines oder mehrerer anderer Merkmale, Schritte, Operationen, Elemente, Komponenten und/oder Gruppen davon ausschließen.

In der vorliegenden Beschreibung und den Ansprüchen können die Begriffe "beinhaltet", "umfasst" und/oder "umfassend" auch "bestehend aus" bedeuten, d.h. das Vorhandensein oder Hinzufügen eines oder mehrerer anderer Merkmale, Schritte, Operationen, Elemente, Komponenten und/oder Gruppen wird ausgeschlossen.

Die Glaszusammensetzung zur Zugentlastung von Anschlussdrähten befindet sich vorzugsweise dergestalt auf der Struktur, dass die Anschlusspads für die Anschlussdrähte bedeckt sind.

Vorteilhafterweise bedeckt die Glaszusammensetzung zumindest anteilig eine darunterliegende siebgedruckte Glasschicht. Hierdurch wird eine besonders hohe Haftkraft zwischen der Glaszusammensetzung und der siebgedruckten Glasschicht erzielt. Dies ist insbesondere von Vorteil, da hierdurch sichergestellt werden kann, dass die Glaszusammensetzung sich bei erhöhter mechanischer Belastung nicht vom passiven Bauelement löst.

Die erfindungsgemäße Glaszusammensetzung ist vorzugsweise dadurch gekennzeichnet, dass die Glaszusammensetzung zur Zugentlastung des mindestens einen Anschlussdrahts verschmelzbar oder versinterbar mit der mindestens einen siebgedruckten Glasschicht ist. Dabei können die Gläser zumindest in Bestandteilen ähnlich oder gleich sein alternativ sind die Gläser in ihren Bestandteilen verschieden, vorzugsweise sodass diese nicht miteinander verschmelzbar oder versinterbar sind.

Ein erhöhter Volumenanteil an Poren in der Glaszusammensetzung ist mit dem Vorteil verbunden, dass die Brucheigenschaften weiter verbessert werden, wobei sich allerdings ein zu hoher Volumenanteil negativ auf die Stabilität der Glaszusammensetzung auswirkt.

Die erfindungsgemäße Glaszusammensetzung ist vorzugsweise dadurch gekennzeichnet, dass der Volumenanteil an Poren 15 bis 45 Vol.-%, bevorzugt mehr als 25 Vol.-%, noch bevorzugter mehr als 30 Vol.-%, beträgt.

Da insbesondere bei einem höheren Volumenanteil an Poren auch die Offenporigkeit der Oberfläche der erfindungsgemäßen Glaszusammensetzung erhöht sein kann, bietet es sich an solche offenen Poren zu verschließen.

Daher sind auch Ausführungsformen denkbar bei denen die erfindungsgemäße Glaszusammensetzung mit einem höheren Volumenanteil an Poren mit einer zweiten Schicht einer Glaszusammensetzung mit einem geringeren Volumenanteil an Poren bedeckt wird. Diese zweite Schicht kann als Schutzschicht verstanden werden, wobei jede geeignete kommerziell erhältliche Glaszusammensetzung oder die erfindungsgemäßen Glaszusammensetzungen mit einem geringeren Volumenanteil an Poren als die zu beschichtenden erfindungsgemäßen Glaszusammensetzungen verwendet werden können.

Neben dem Volumenanteil an Poren in der Glaszusammensetzung können auch die Form und Größe der Poren einen Einfluss auf die Brucheigenschaften der erfindungsgemäßen Glaszusammensetzung haben.

Die erfindungsgemäße Glaszusammensetzung ist vorzugsweise dadurch gekennzeichnet, dass die Poren einen Volumengewichteten mittleren Durchmesser von >20 µm, bevorzugt > 30 µm besonders bevorzugt von >35 µm, bestimmt gemäß Volumengewichtung, aufweisen.

Es hat sich gezeigt, dass die Brechbarkeit der Glaszusammensetzung durch die Form der Poren beeinflusst werden kann. Die Poren in Glaszusammensetzung gemäß dem Stand der Technik weisen oftmals unregelmäßige Formen auf. Ohne an irgendeine spezielle Theorie gebunden sein zu wollen wird angenommen, dass diese unregelmäßigen geformten Poren mitverantwortlich für die ungenügenden Brucheigenschaften von Glaszusammensetzung gemäß dem Stand der Technik sind.

Vorteilhafterweise sind die Poren in der erfindungsgemäßen Glaszusammensetzung näherungsweise isotrop, wobei die Isotropie über das Aspektverhältnis definiert ist. Unter Aspektverhältnis, im Sinne der vorliegenden Erfindung, ist der Quotient zwischen Porenhöhe und Porenbreite zu verstehen. Die Porenhöhe bezeichnet vorzugsweise die maximale Ausdehnung einer Pore senkrecht zum Substrat und die Porenbreite entspricht vorzugsweise der maximalen Ausdehnung einer Pore parallel zum Substrat, beides bevorzugt gemessen in einer Schnittfläche senkrecht zum Substrat.

Es hat sich gezeigt, dass bereits ein Aspektverhältnis von mindestens 60 Vol.-% Poren größer als 0,5 genügt, um die Ausfallquoten bei der Vereinzelung der passiven Bauelemente zu reduzieren. Je höher der Anteil Poren ist, die das geforderte Aspektverhältnis erfüllen, und/oder je höher das Aspektverhältnis ist, desto geringer sind die Ausfallquoten bei der Vereinzelung der passiven Bauelemente.

Die erfindungsgemäße Glaszusammensetzung ist vorzugsweise dadurch gekennzeichnet, dass das Aspektverhältnis von mindestens 60 Vol.-%, bevorzugt mindestens 70 Vol.-%, insbesondere mehr als 80 Vol.-% der Poren, definiert als der Quotient der maximalen Ausdehnung einer Pore senkrecht zum Substrat (Porenhöhe) und der maximalen Ausdehnung einer Pore parallel zum Substrat (Porenbreite), größer ist als 0,5, bevorzugt größer ist als 0,6 und insbesondere größer ist als 0,7, wobei das Aspektverhältnis bevorzugt in einer Schnittfläche senkrecht zum Substrat zu bestimmen ist.

Weiterhin sind alle Kombinationen der genannten Aspektverhältnisse und Anteile an Poren, die dieses Aspektverhältnis erfüllen, umfasst.

Da passive Bauelemente während des Betriebs oder durch die Umgebungen erhöhten Temperaturen ausgesetzt sind, kann es z.B. in feuchter Atmosphäre zu einem Wasserschlag auf dem heißen passiven Baudelement kommen. In der Regel sind spezielle Schutzmaßnahmen zur Vermeidung des Temperaturschocks auf der Oberfläche des passiven Bauelements notwendig.

Vorteilhafterweise kann auf diese zusätzlichen Schutzmaßnahmen bei der erfindungsgemäßen Glaszusammensetzung mit möglichst isotropen Poren verzichtet werden, da diese eine geringe Wärmeleitfähigkeit aufweist. Diese Eigenschaft ist insbesondere bei der bevorzugten Verwendung als Fixiertropfen auf einem passiven Bauelement vorteilhaft. Hierbei ist es ebenfalls vorteilhaft, dass die vorstehend beschriebene Glaszusammensetzung einen geringen Ausdehnungskoeffizienten in Richtung quer zur darunterliegenden siebgedruckten Glasschicht aufweist.

Weiterhin bieten Glaselemente aus isolierenden Gläsern mit geschlossenen (gasgefüllten) Poren mit hohem Aspektverhältnis bessere elektrische Isolationseigenschaften als offenporige Gläser oder Gläser mit Poren mit geringem Aspektverhältnis. Das gilt insbesondere auch für die Durchschlagsfestigkeit parallel zum Substrat und senkrecht zur Drahtrichtung der Anschlußdähte. Dieser Wert hat eine praktische Bedeutung, weil in dieser Richtung der Isolationswiderstand eines Sensors zwischen den Drähten gemessen wird.

Die Poren in der erfindungsgemäßen Glaszusammensetzung entstehen vorwiegend durch die *in situ* Freisetzung von Gas, wobei die niedrige Viskosität der erfindungsgemäßen Glaszusammensetzung bei Temperaturen unter 750°C verhindert, dass der Großteil des freigesetzten Gases entweichen kann.

Die erfindungsgemäße Glaszusammensetzung ist ferner vorzugsweise dadurch gekennzeichnet, dass die Glaszusammensetzung bei Temperaturen von über 500 °C, bevorzugt über 680 °C, erhalten wurde, wobei *in situ* Gas, insbesondere CO₂, N₂, O₂ oder Mischungen davon, freigesetzt wurde, um die Poren auszubilden.

Die Menge an in situ freigesetztem Gas kann durch die Zugabe von sogenannten Gasbildnern gesteuert werden. Als Gasbildner können alle Verbindungen dienen, welche in der Lage sind bei entsprechenden Temperaturen *in situ* Gas freizusetzten. Diese umfassen vorzugsweise Carbonate, sowie beispielsweise MgCOa.

Um die Zugabe von Gasbildnern zu vermeiden, könnte dem Vorprodukt der erfindungsgemäßen Glaszusammensetzung, welche im Folgenden als Glaspaste bezeichnet wird, auch extern Gas, insbesondere CO₂ oder N₂ zugeführt werden.

In einer speziellen Ausführung können Gasbildner in der Glaspaste oder in mindestens einem festen Bestandteil der Glaspaste als Teilbestandteil vorkommen.

Neben dem Volumenanteil der Poren in der erfindungsgemäßen Glaszusammensetzung und deren bevorzugter Größe und Form ist die Verteilung der Poren im Zentrum der erfindungsgemäßen Glaszusammensetzung vorzugsweise möglichst gleichmäßig. Eine gleichmäßige Verteilung bedeutet in diesem Zusammenhang, dass der Glasanteil in direkter Umgebung einer Pore höher ist als der durchschnittliche Glasanteil. Hierdurch wird ausgedrückt, dass die Poren im Mittel einen gewissen Abstand zueinander haben und nicht lokal wesentlich höhere Konzentrationen an Poren in der erfindungsgemäßen Glaszusammensetzung vorliegen. Somit ist auch sichergestellt, dass die Poren im Mittel eine bestimmte Wandstärke aufweisen und die vorteilhaften Eigenschaften der Poren in der gesamten erfindungsgemäßen Glaszusammensetzung zum Tragen kommen.

Die erfindungsgemäße Glaszusammensetzung ist ferner vorzugsweise dadurch gekennzeichnet, dass jeweils in den ersten 15 µm um eine Pore der Glasanteil höher ist als der durchschnittliche Glasanteil der Glaszusammensetzung im Durchschnitt über den ganzen Fixiertropfen, wobei bei der Bestimmung des durchschnittlichen Glasanteils die äußersten 30 µm der Glaszusammensetzung nicht mit einbezogen werden.

Weiterhin ist es vorteilhaft, wenn auch in den äußersten 30 µm der erfindungsgemäßen Glaszusammensetzung keine lokal höheren Anteile an Poren vorhanden sind. Insbesondere eine erhöhte Wandstärke der Poren an den Rändern der erfindungsgemäßen Glaszusammensetzung führt insgesamt zu einer höheren Stabilität.

Die erfindungsgemäße Glaszusammensetzung ist ferner vorzugsweise dadurch gekennzeichnet, dass jeweils in den ersten 15 µm um eine Pore der Glasanteil höher ist als in dem Bereich von 15-30 µm um diese Pore.

Die vorliegende Erfindung betrifft ferner ein passives Bauelement, insbesondere Sensor, vorzugsweise Temperatursensor, oder Heizer.

Die vorliegende Erfindung betrifft ferner ein passives Bauelement, insbesondere Sensor, vorzugsweise Temperatursensor, oder Heizer, umfassend Anschlussdrähte und ein anorganisches Substrat, insbesondere Metalloxid-, Halbleiter- und/oder Glassubstrat.

Die vorliegende Erfindung betrifft ferner ein passives Bauelement, insbesondere Sensor, vorzugsweise Temperatursensor, oder Heizer, umfassend Anschlussdrähte und ein anorganisches Substrat, insbesondere Metalloxid-, Halbleiter- und/oder Glassubstrat, dadurch gekennzeichnet, dass die Anschlussdrähte durch die aufgetragene erfindungsgemäße Glaszusammensetzung zugentlastet sind.

Das Vereinzeln durch Brechen hat sich als besonders wirtschaftliches Verfahren für passive Bauelemente etabliert. Bei dieser Trennmethode hat es sich als vorteilhaft erwiesen, wenn Sollbruchstellen im Substrat vorhanden sind und somit ein einfaches Brechen, insbesondere bei harten Substraten, möglich ist.

Das erfindungsgemäße passive Bauelement ist ferner vorzugsweise, dadurch gekennzeichnet, dass das passive Bauelement durch Vereinzelung erhalten wurde, wobei das Vereinzeln ein Brechen, insbesondere an mindestens einer Sollbruchstelle, umfasst.

Auch wenn aus prozessökonomischer Sicht, dass Vereinzeln durch Brechen dem Sägen vorzuziehen ist, ist es mit einigen Herausforderungen verbunden geeignete Glaszusammensetzungen bereitzustellen, welche für diese Methode geeignet sind.

Insbesondere das Auftreten von kritischer Rissbildung ist vorzugsweise auf ein Minimum zu reduzieren, um die Ausfallquote bei der Herstellung zu reduzieren.

Das erfindungsgemäße passive Bauelement ist ferner vorzugsweise, dadurch gekennzeichnet, dass die Glaszusammensetzung eine minimale kritische Rissbildung bei der Vereinzelung der passiven Bauelemente aufweist.

Im Sinne der vorliegenden Erfindung wird die Rissbildung anhand der Schnittwinkel charakterisiert. Beim Vereinzeln der passiven Bauelemente werden mindestens zwei passive Bauelemente durch Brechen voneinander getrennt. Die sich hierdurch gebildete Bruchfläche an einem der passiven Bauelemente ist idealerweise senkrecht zur Substratebene, sodass die vier Schnittwinkel zwischen Bruchfläche und Substratebene alle 90° betragen. Da sich Nebenwinkel zu 180° ergänzen, ist es nicht nötig alle Winkel zu berücksichtigen, sondern die Qualifizierung der Rissbildung kann über die Angabe des kleinsten Schnittwinkels erfolgen. Unter realen Bedingungen brechen die passiven Bauelemente allerdings nicht ideal, sondern es kann zu erheblichen Abweichungen kommen. Insbesondere facettierte oder krummlinige Bruchflächen können vorkommen. Diese Abweichungen sind tolerierbar, allerdings ist es vorteilhaft, wenn kritische Rissbildungen senkrecht (oder besser im großen Winkel) zur Hauptbruchrichtung und Mikrorisse in der Glaszusammensetzung vermieden werden, sodass die Ausfallquote bei der Herstellung der passiven Bauelemente auf ein Minimum reduziert wird.

Unter kritischer Rissbildung wird daher verstanden, dass der kleinste Schnittwinkel zwischen der Bruchfläche und der Substratebene des passiven Bauelements weniger als 45° beträgt.

Es ist daher bevorzugt, dass der kleinste Schnittwinkel zwischen der Bruchfläche und der Substratebene des passiven Bauelements über 45°, bevorzugter 60°, weiter bevorzugt über 70° beträgt.

Unter Mikrorisse werden feine Risse in der Glaszusammensetzung zusammengefasst, die nur schwierig zu erkennen sind. Diese Mikrorisse können bei dem Brechen der Glaszusammensetzung auftreten und werden beispielsweise durch optische Kontrolle nach Abschluss der Herstellung der passiven Bauelemente erkannt. Hierbei wird insbesondere überprüft ob die Anschlussdrähte freiliegen und ob die gewünschte Breite des passiven Bauelements eingehalten wurde.

Passive Bauelemente gemäß dem Stand der Technik sind oftmals auf die Verwendung von Silber- oder Platinanschlussdrähten beschränkt, was zu erhöhten Kosten führt. Die bevorzugte Verwendung von Nickelanschlussdrähten würde zwar eine Kostenersparnis bedeuten, ist allerdings häufig technisch nicht sinnvoll. Ein Grund hierfür liegt in der oxidierenden Atmosphäre, die normalerweise während des Herstellungsprozesses von passiven Bauelementen vorliegt. Um eventuelle Nebenreaktionen zu verhindern, kann der Nickelanschlussdraht vorzugsweise mit Silber- und/oder Platin ummantelt sein. Entsprechende Nickelmanteldrähte sind z.B. aus DE 10 2007 046 907 B4 bekannt.

Das erfindungsgemäße passive Bauelement ist ferner optional dadurch gekennzeichnet, dass die Anschlussdrähte Nickel- oder Messingdraht, optional mit Silbermantel und/oder Platinmantel umfassen.

Alternativ können auch Gold- oder goldummantelte Nickel- oder Messingdrähte verwendet werden. Diese sind vorteilhaft, da Golddrähte oder goldummantelte Drähte sich im Vergleich zu platinummatelten Drähten leichter Drahtbonden und besser löten lassen.

Das erfindungsgemäße passive Bauelement ist ferner vorzugsweise, dadurch gekennzeichnet, dass das passive Bauelement ein Temperatursensor ist, der die Gültigkeit der Toleranzklasse F 0.3 (B) bei einer Temperatur von -70 °C bis 500 °C einhält.

Weitere bevorzugte Ausgestaltungen des erfindungsgemäßen passiven Bauelements erfüllen die Toleranzklasse F 0,6 (2B) bei einer Temperatur von -70 °C bis 500 °C oder F 0,15 (A) bei der Temperatur von -70°C bis 300°C.

Die vorliegende Erfindung betrifft ferner ein Verfahren zur Herstellung von passiven Bauelementen, insbesondere zur Herstellung des erfindungsgemäßen passiven Bauelements. Das Verfahren umfasst die folgenden Schritte, wobei die im Folgenden zitierte Reihenfolge der einzelnen Schritte nicht zwingend ist
- Bereitstellen eines anorganischen Substrats, insbesondere eines Metalloxid- oder Halbleitersubstrats oder eines Glassubstrats
- Anordnen von mehreren Strukturen, insbesondere in einer Reihe, auf dem anorganischen Substrat,
- Ausbilden von Sollbruchstellen in dem anorganischen Substrat zwischen den Strukturen, insbesondere mittels eines Lasers und/oder mittels mechanischer Abtragung,
- Anbringen von mindestens einem Anschlussdraht an jede der Strukturen,
- Bedecken der strukturzugewandten Endbereiche der Anschlussdrähte durch Aufbringen einer durchgängigen Glaspaste,
- Antrocknen der durchgängigen Glaspaste
- Erwärmen der durchgängigen Glaspaste auf eine Temperatur von über 500 °C, bevorzugt von 680 °C bis 720 °C, um eine in situ Gasbildung in der durchgängigen Glaspaste zu initiieren, um eine Glaszusammensetzung, insbesondere der erfindungsgemäßen Glaszusammensetzung, zu erhalten,
- Abkühlen der Glaszusammensetzung auf eine Temperatur bei der die Glaszusammensetzung formstabil ist,
- Vereinzelung der passiven Bauelemente durch das Brechen des anorganischen Substrats und des durchgängigen Glaselements an den Sollbruchstellen.

Die vorstehende Reihenfolge der Schritte ist nicht zwingend, sondern umfasst ferner alle technisch sinnvollen Reihenfolge. Es wäre zum Beispiel möglich die Sollbruchstellen erst nach dem Auftragen Aufbringen eines durchgängigen Glaselements auszubilden.

In einer bevorzugten Ausgestaltung des erfindungsgemäßen Verfahrens werden die Verfahrensschritte in der aufgelisteten Reihenfolge ausgeführt.

Die Verwendung von Glaspasten gemäß dem Stand der Technik in dem erfindungsgemäßen Verfahren ist mit dem Nachteil verbunden, dass diese Glaspasten beim Erwärmen in die Sollbruchstellen fließen können. Daher kann es nötig sein, die Sollbruchstellen nach Auftragen der Glaspaste auszubilden. Die erfindungsgemäße Glaszusammensetzung zeigt eine geringe Tendenz zu diesem Verhalten, sodass die Prozessführung flexibler gestaltet werden kann und ein eventuelles Nacharbeiten der Sollbruchstellen entfällt.

In einer anderen bevorzugten Ausgestaltung des erfindungsgemäßen Verfahrens, wird die Glaspaste auf eine Temperatur von 100°C bis zu 500 °C erwärmt, wobei eine zusätzliche Luftzufuhr sicherstellt, dass die Glaspaste pyrolysiert wird.

In einer anderen bevorzugten Ausgestaltung des erfindungsgemäßen Verfahrens, umfasst die mehrlagige Struktur eine siebgedruckte Glasschicht. Der Schritt des Bedeckens der Anschlussdrähte durch Aufbringen eines durchgängigen Glaselements wäre dann wie folgt ausgestaltet.
- Bedecken der Anschlussdrähte und zumindest anteiliges Bedecken der siebgedruckten Glasschicht durch Aufbringen eines durchgängigen Glaselements, insbesondere durch Aufbringen der erfindungsgemäßen Glaszusammensetzung, über die mehreren Strukturen, wobei die Ausdehnung des Fixiertropfen in der Ausdehnungsrichtung der Anschlussdrähte bevorzugt zwischen 5 und 1 mm, weiter bevorzugt zwischen 3 und 1 mm, und noch weiter bevorzugt zwischen 3 mm und 1.5 mm ist.
Besonders bevorzugt ist, dass die Anteile der Anschlussdrähte, die über dem Substrat verlaufen, komplett mit dem Fixierglas bedeckt sind.

Durch diese bevorzugte Ausgestaltung des erfindungsgemäßen Verfahrens, geht die Grenzfläche zwischen dem Glaselement und der siebgedruckten Glasschicht in eine ungefähr 5 bis 20 µm dicke Durchmischungszone über. Dadurch wird eine besonders hohe Haftkraft zwischen dem Glaselement und der siebgedruckten Glasschicht erreicht. Dies ist vor allem bei der Herstellung passiver Bauelemente von Vorteil, da es die Gefahr minimiert, dass das Glaselement beim Vereinzeln durch Brechen der passiven Bauelemente abgesprengt wird. Weiterhin kann hierdurch die elektrische Durchschlagsfestigkeit des passiven Bauelements erhöht werden.

Alle bevorzugten Ausführungsformen und Definitionen für die erfindungsgemäßen passiven Bauelemente gelten analog für das erfindungsgemäße Verfahren.

Die vorliegende Erfindung betrifft ferner ein passives Bauelement erhältlich nach dem vorstehend beschriebenen Verfahren.

Die vorliegende Erfindung betrifft zudem die Verwendung einer Glaszusammensetzung, wie vorstehend beschrieben, zur Zugentlastung von Anschlussdrähten an passiven Bauelementen, insbesondere wie vorstehend beschrieben oder erhältlich nach dem vorstehend beschriebenen Verfahren.

In einer bevorzugten Ausgestaltung der erfindungsgemäßen Verwendung wurden die passiven Bauelemente durch Vereinzelung erhalten, wobei das Vereinzeln ein Brechen, insbesondere an Sollbruchstellen, umfasst.

Die vorstehend für die erfindungsgemäße Glaszusammensetzung und das erfindungsgemäße passive Bauelement aufgeführten bevorzugten Ausführungsformen gelten auch für das erfindungsgemäße Verfahren, das mit diesem Verfahren erhaltenen passive Bauelement und die Verwendung der Glaszusammensetzung.

### Beschreibung der Figuren

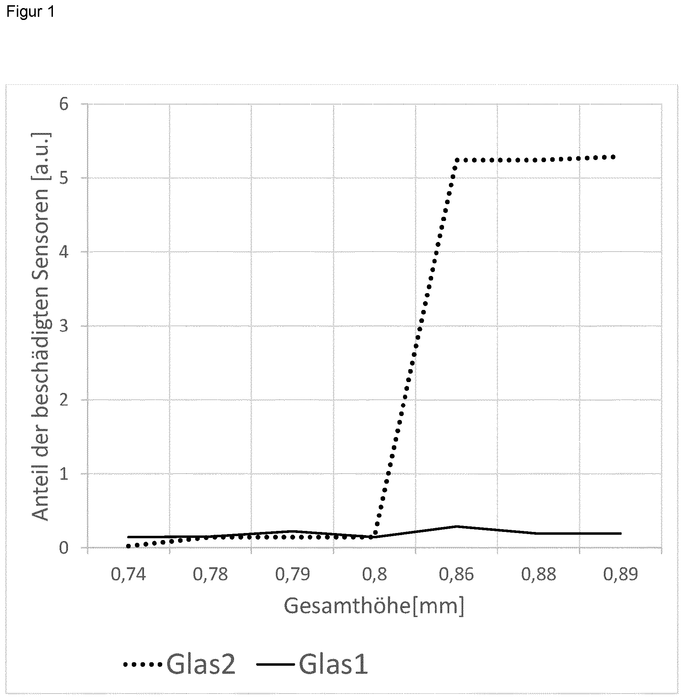

Figur 1 zeigt die Ausfallquote beim Vereinzeln durch Brechen von passiven Bauelementen in Abhängigkeit zur Gesamthöhe des passiven Bauelements. Die Glaszusammensetzung 2 zeigt rapide ansteigende Ausfallquoten bei einer Schichtdicke von über 0,8 mm. Die Glaszusammensetzung 1 zeigt hingegen deutlich niedrigere Ausfallquoten insbesondere auch bei hohen Schichtdicken.

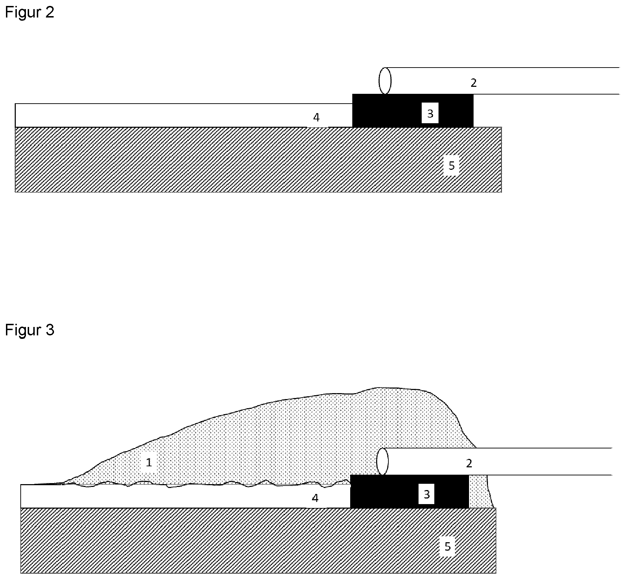

Figur 2 zeigt eine schematische Darstellung eines passiven Bauelementes ohne Glaselement zur Zugentlastung von Anschlussdrähten. Auf dem Substrat (5) befindet sich ein Anschlusspad (3) und eine siebgedruckte Glasschicht (4). An dem Anschlusspad (3) ist ein Anschlussdraht (2) befestigt.
Figur 3 zeigt eine schematische Darstellung des erfindungsgemäßen passiven Bauelementes. Auf dem Substrat (5) befindet sich ein Anschlusspad (3) und eine siebgedruckte Glasschicht (4). An dem Anschlusspad (3) ist ein Anschlussdraht (2) befestigt, welcher durch eine Glaszusammensetzung (1) zugentlastet ist.

Die Erfindung wird nachfolgend anhand von nicht beschränkenden Beispielen näher erläutert.

### Beispiele

### Beispiel 1

Eine Glaszusammensetzung gemäß Tabelle 1 wird trocken homogen vermischt, mit Wasser aufgeschlämmt und auf die Platin- Anschlussdrähte der vorbereiteten mit Laser-Kerben versehene Sensorreihe durch Dispensen in einem dicken Strang aufgebracht. Dabei ist die Substratdicke unter den Sensoren 0,38 mm. Nach dem Trocken ist das ganze passive Bauteil 0,95 mm hoch. Danach erfolgt eine Wärmebehandlung in einem luftähnlichen Gasgemisch bei 740°C für 20 Minuten.

**Tabelle 1**

| Oxid | Menge in Gewichtsprozent |
|---|---|
| SiO₂ | 24,5 |
| Al₂O₃ | 10 |
| CaO | 0,03 |
| K₂O | 0,11 |
| Na₂O | 0,22 |
| B₂O₃ | 2,27 |
| BaO | 9,9 |
| Bi₂O₃ | 48,3 |
| ZnO | 4,67 |
| PbO | <0,01 |

Nach dem Glühen und Abkühlen werden die einzelnen Sensoren in der Sensorreihe vereinzelt. In jedem Bauteil sind die Drähte fixiert und über dem passiven Bauteil isoliert. Dabei werden in der Bruchfläche die Poren mit einem Aspektverhältnis von durchschnittlich 0,9 sichtbar, wenn nur die Poren mit sichtbarer Öffnung größer 0,5 µm betrachtet werden. Die Innenseiten der Blasen sind mit amorphem Material ausgekleidet. Das Porenvolumen beträgt 32%.

Diese Glaszusammensetzung hat gegenüber von Standardbauteilen bei gleicher Geometrie des Glaselementes eine erhöhte Isolationswirkung. In der geometrischen Bauform der M222Sensoren ergeben sich Vergleichswerte zu den im Handel verfügbaren -Fühlern der Bauform M222, mit der Bestellnummer 32208551 von Yageo Nexensos, mit dem kommerziell verwendeten Fixiertropfen , welche in Tabelle 2 zusammengefasst sind. https://www.heraeus.com/media/media/hne/datasheets/m_sensors/de_11/m_222_d.pdf).

**Tabelle 2**

| Isolationswiderstand bei: | 20°C [MΩ] | 500°C [MΩ] | 550°C [MΩ] |
|---|---|---|---|
| Glas 1 (gemessen) Bauteilhöhe 0.95 mm | >10.000 | Nicht gemessen | 170 |
| Glas (gemessen) Bauteilhöhe 0.80 mm | >10.000 | Nicht gemessen | 170 |
| Glas aus Standardsensor Bestellnummer 32208551 (gemessen) | Nicht gemessen | Nicht gemessen | 36 |
| Spezifikation aus Datenblatt für Pt-1000 Standardsensor 32208551 nach DIN EN 60751 | >100 | >2 | |

### Beispiel 2

Für eine Glaszusammensetzung gemäß Tabelle 3 ergibt sich nach dem Glühen lediglich ein lediglich ein Aspektverhältnis von 0,173. Das Porenvolumen ist trotzdem hoch und beträgt 29%. Die Sensorreihe kann bruchfrei geglüht werden, ein Vereinzeln durch Brechen führt bei vielen der angelegten Sensoren jedoch zu Ausschussteilen. Trotz der falschen und teilweise krummen Lage der Bruchflächen ist ein sichtbare Aspektverhältnis der Poren als sehr klein identifizierbar. Es beträgt durchschnittlich 0,17 für die Poren mit mindestens 0,5 µm Porenbreite senkrecht zur Substratrichtung.

**Tabelle 3**

| Glaszusammensetzung 2 | Gew.% |
|---|---|
| SiO₂ | 46 |
| Bi₂O₃ | 10,6 |
| B₂O₃ | 8,6 |
| ZnO | 8,1 |
| Al₂O₃ | 6,6 |
| SrO | 6,1 |
| CoO | 5,1 |
| K₂O | 3,3 |
| BaO | 3,2 |
| MgO | 1,1 |
| Na₂O | 1 |
| CaO | 0,2 |
| Fe₂O₃ | 0,1 |
| PbO | <0,01 |

Diese Sensoren sind in dieser Bauteilhöhe offensichtlich nicht mit geringen Ausschussquoten brechbar.

Beim Auftragen von geringeren Mengen an Fixierpaste lassen sich sehr wohl auch mit dieser Paste brechbare Sensoren herstellen. Die Höhe der Fixierung über den Anschlussdrähten ist aber für die Glaszusammensetzung gemäß Tabelle 3 geringer. Das Aspektverhältnis der Porengröße bleibt innerhalb der Mess- und Statistikungenauigkeit unverändert nahe 0,17 für die Poren mit mindestens 0,5 µm Porenbreite senkrecht zur Substratrichtung. Die Innenseiten der Poren sind in wesentlichen Teilen nicht verglast.

**Tabelle 4**

| Isolationswiderstand bei: | 20°C [MΩ] | 500°C [MΩ] | 550°C [MΩ] |
|---|---|---|---|
| Glas 2 (gemessen) Bauteilhöhe 0.85 mm | Nicht gemessen | 42 | 23 |

## Patentansprüche

1. Glaszusammensetzung, insbesondere Fixiertropfen, zur Zugentlastung von Anschlussdrähten an passiven Bauteilen, insbesondere Sensoren, vorzugsweise Temperatursensoren, oder Heizern auf einem anorganischen Substrat, insbesondere Metalloxid-, Halbleiter- und/oder Glassubstrat,
**dadurch gekennzeichnet, dass**
die Glaszusammensetzung Poren mit einem Volumenanteil von mehr als 15 Vol.-% als relativer Flächenanteil der Poren in einer Querschnittsfläche senkrecht zum Substrat aufweist.

2. Glaszusammensetzung gemäß Anspruch 1,
**dadurch gekennzeichnet, dass**
der Volumenanteil an Poren 15 bis 45 Vol.-%, bevorzugt mehr als 25 Vol.-%, noch bevorzugter mehr als 30 Vol.-%, beträgt.

3. Glaszusammensetzung gemäß Anspruche 1 oder 2,
**dadurch gekennzeichnet, dass**
die Poren einen Volumengewichteten mittleren Durchmesser von >20 µm, bevorzugt > 30 µm besonders bevorzugt von >35 µm, bestimmt gemäß Volumengewichtung, aufweisen.

4. Glaszusammensetzung gemäß einem der vorhergehenden Ansprüche,
**dadurch gekennzeichnet, dass**
das Aspektverhältnis von mindestens 60 Vol.-%, bevorzugt mindestens 70 Vol.-%, insbesondere mehr als 80 Vol.-% der Poren, definiert als der Quotient der maximalen Ausdehnung einer Pore senkrecht zum Substrat (Porenhöhe) und der maximalen Ausdehnung einer Pore parallel zum Substrat (Porenbreite), größer ist als 0,5, bevorzugt größer ist als 0,6 und insbesondere größer ist als 0,7, wobei das Aspektverhältnis bevorzugt in einer Schnittfläche senkrecht zum Substrat zu bestimmen ist.

5. Glaszusammensetzung gemäß einem der vorhergehenden Ansprüche,
**dadurch gekennzeichnet, dass**
die Glaszusammensetzung bei Temperaturen von über 500 °C, bevorzugt über 680 °C, erhalten wurde, wobei in situ Gas, insbesondere CO2, N2, O2 oder Mischungen davon, freigesetzt wurde um die Poren auszubilden.

6. Glaszusammensetzung gemäß einem der vorhergehenden Ansprüche,
**dadurch gekennzeichnet, dass**
jeweils in den ersten 15 µm um eine Pore der Glasanteil höher ist als der durchschnittliche Glasanteil der Glaszusammensetzung im Durchschnitt über den ganzen Fixiertropfen, wobei bei der Bestimmung des durchschnittlichen Glasanteils die äußersten 30 µm der Glaszusammensetzung nicht mit einbezogen werden.

7. Glaszusammensetzung gemäß einem der vorhergehenden Ansprüche,
**dadurch gekennzeichnet, dass**
jeweils in den ersten 15 µm um eine Pore der Glasanteil höher ist als in dem Bereich von 15-30 µm um diese Pore.

8. Passives Bauelement, insbesondere Sensor, vorzugsweise Temperatursensor, oder Heizer, umfassend Anschlussdrähte und ein anorganisches Substrat, insbesondere Metalloxid-, Halbleiter- und/oder Glassubstrat,
**dadurch gekennzeichnet, dass**
die Anschlussdrähte durch eine aufgetragene Glaszusammensetzung gemäß einem der Ansprüche 1 bis 7 zugentlastet sind.

9. Passives Bauelement gemäß Anspruch 8
**dadurch gekennzeichnet, dass**
das passive Bauelement durch Vereinzelung erhalten wurde, wobei das Vereinzeln ein Brechen, insbesondere an mindestens einer Sollbruchstelle, umfasst.

10. Passives Bauelement gemäß Anspruch 8 oder 9,
**dadurch gekennzeichnet, dass**
die Glaszusammensetzung eine minimale kritische Rissbildung bei der Vereinzelung der passiven Bauelemente aufweist.

11. Passives Bauelement gemäß einem der Ansprüche 8 bis 10
**dadurch gekennzeichnet, dass**
die Anschlussdrähte Nickeldraht, optional mit Silbermantel und/oder Platinmantel umfassen.

12. Passives Bauelement gemäß einem der Ansprüche 8 bis 11,
**dadurch gekennzeichnet, dass** das passive Bauelement ein Temperatursensor ist, der die Gültigkeit der Toleranzklasse F 0.3 (B) bei einer Temperatur von -70 °C bis 500 °C einhält.

13. Verfahren zur Herstellung von passiven Bauelementen nach einem der Ansprüche 5 bis 8, umfassend die Schritte:
- Bereitstellen eines anorganischen Substrats, insbesondere eines Metalloxid- oder Halbleitersubstrats oder eines Glassubstrats.
- Anordnen von mehreren Strukturen, insbesondere in Reihe, auf dem anorganischen Substrat
- Ausbilden von Sollbruchstellen in dem anorganischen Substrat zwischen den Strukturen insbesondere mittels eines Lasers und/oder mittels mechanischer Abtragung,
- Anbringen von mindestens einem Anschlussdraht an jeden der Strukturen
- Bedecken der Anschlussdrähte durch Aufbringen einer durchgängigen Glaspaste,
- Antrocknen der durchgängigen Glaspaste
- Erwärmen der durchgängigen Glaspaste auf eine Temperatur von über 500 °C, bevorzugt von 680 °C bis 720 °C, um eine in situ Gasbildung in der durchgängigen Glaspaste zu initiieren, um eine Glaszusammensetzung, insbesondere gemäß der Ansprüche 1 bis 7, zu erhalten,
- Abkühlen der Glaszusammensetzung auf eine Temperatur bei der die Glaszusammensetzung formstabil ist
- Vereinzelung der passiven Bauelemente durch das Brechen des anorganischen Substrats und des durchgängigen Glaselements an den Sollbruchstellen.

14. Passives Bauelement, erhältlich durch das Verfahren nach Anspruch 13.

15. Verwendung einer Glaszusammensetzung nach einem der Ansprüche 1 bis 7 zur Zugentlastung von Anschlussdrähten an passiven Bauelementen, insbesondere gemäß einem der Ansprüche 8 bis 12 oder Anspruch 14.

16. Verwendung gemäß Anspruch 15,
**dadurch gekennzeichnet, dass**
die passiven Bauelemente durch Vereinzelung erhalten wurde, wobei das Vereinzeln der ein Brechen, insbesondere an Sollbruchstellen, umfasst.
